# FASCICULE DE BREVET EUROPEEN

(11) **EP 1 982 380 B1**
(45) Date de publication et mention de la délivrance du brevet: **12.05.2010**
(21) Numéro de dépôt: 06847219.0
(22) Date de dépôt: 27.12.2006
(51) Int. Cl.: H01M 8/10, H01M 8/04

(54) **CELLULE DE PILE A COMBUSTIBLE INTEGREE ET PROCEDE DE FABRICATION**
INTEGRIERTE BRENNSTOFFZELLE UND HERSTELLUNGSVERFAHREN
INTEGRATED FUEL CELL AND A PRODUCTION METHOD

(30) Priorité: 27.12.2005 FR 0554104
(43) Date de publication de la demande: 22.10.2008
(73) Titulaire: STMICROELECTRONICS SA, 92120 Montrouge (FR)
(72) Inventeur: ROY, Mathieu, 37300 Joue Les Tours (FR); PIERRE, Fabien, 37540 Saint Cyr Sur Loire (FR)
(74) Mandataire: de Beaumont, Michel
(86) Numéro de dépôt international: PCT/FR2006/051430
(87) Numéro de publication internationale: WO 2007/074317

(56) Documents cités:
- WO-A-2004/091026
- FR-A- 2 857 163
- FR-A- 2 880 200
- US-A1- 2003 096 146
- YU J ET AL: "Fabrication of miniature silicon wafer fuel cells with improved performance" JOURNAL OF POWER SOURCES, ELSEVIER, AMSTERDAM, NL, vol. 124, no. 1, 1 octobre 2003 (2003-10-01), pages 40-46, XP004454590 ISSN: 0378-7753
- YEOM J ET AL: "Microfabrication and characterization of a silicon-based millimeter scale, PEM fuel cell operating with hydrogen, methanol, or formic acid" SENSORS AND ACTUATORS B, ELSEVIER SEQUOIA S.A., LAUSANNE, CH, vol. 107, no. 2, 29 juin 2005 (2005-06-29), pages 882-891, XP004899927 ISSN: 0925-4005

## Description

### Domaine de l'invention

La présente invention concerne une pile à combustible et un procédé de fabrication de pile à combustible intégrée.

### Exposé de l'art antérieur

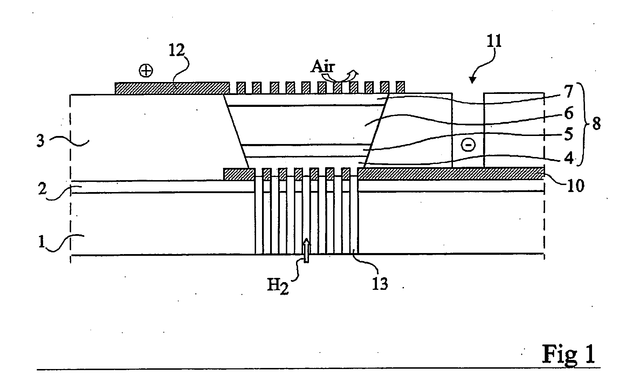

La figure 1 représente un exemple de cellule de pile à combustible intégrée réalisée en utilisant des techniques de microélectronique. Cette cellule est formée sur une plaque support constituée d'une plaquette de silicium 1 revêtue d'une première couche isolante 2 fine et d'une seconde couche isolante 3 plus épaisse. Une ouverture est formée dans une partie de la couche isolante 3. Dans cette ouverture sont successivement déposées une couche support 4, une couche de catalyseur 5, une couche d'électrolyte 6 et une seconde couche de catalyseur 7. L'ensemble de ces couches constitue un empilement actif 8. Une électrode 10, placée sur la première couche isolante 2, est en contact avec la couche support 4 du côté de la face inférieure de la cellule de pile. Une ouverture 11 dans la seconde couche isolante 3 permet d'accéder à l'électrode 10. Une électrode supérieure 12 est en contact avec la couche de catalyseur supérieure 7. Les électrodes 10 et 12 sont munies d'ouvertures, et des canaux 13 sont formés dans la plaquette de silicium 1 en regard des ouvertures dans la métallisation de face inférieure. Les électrodes inférieure 10 et supérieure 12 constituent respectivement un collecteur d'anode et un collecteur de cathode.

L'électrolyte 6 est par exemple un acide polymère tel que du Nafion sous forme solide et les couches de catalyseur sont par exemple des couches à base de carbone et de platine. Ceci ne constitue qu'un exemple de réalisation. Divers types de piles à combustible réalisables sous la forme illustrée en figure 1 sont connus dans la technique.

Pour faire fonctionner la pile à combustible, on injecte de l'hydrogène selon la flèche H₂ du côté de la face inférieure et de l'air (porteur d'oxygène) est injecté du côté de là face supérieure. L'hydrogène est "décomposé" au niveau de la couche de catalyseur 5 pour former d'une part des protons H⁺ qui se dirigent vers l'électrolyte 6 et d'autre part des électrons qui se dirigent, par l'extérieur de la pile, vers le collecteur d'anode 10. Les protons H⁺ traversent l'électrolyte 6 jusqu'à rejoindre la couche de catalyseur 7 où ils se recombinent avec l'oxygène et des électrons arrivant de l'extérieur de la pile par le collecteur de cathode. De façon connue, avec une telle structure, on obtient un potentiel positif sur le collecteur de cathode 12 (côté oxygène) et un potentiel négatif sur le collecteur d'anode 10 (côté hydrogène).

Un inconvénient de ce type de cellule de pile à combustible réside dans les phénomènes apparaissant au niveau du débouché des canaux 13 d'introduction d'hydrogène. Il s'avère en pratique qu'au lieu que les réactions se produisent sur toute la surface de la couche de catalyseur inférieure 5, ces réactions ne surviennent en fait que sur une partie de cette surface correspondant sensiblement à la surface occupée par les ouvertures des canaux d'introduction d'hydrogène. C'est-à-dire, que le rendement de ce type de pile est divisé par un facteur 2 à 3 par rapport à ce que l'on pourrait en espérer. On peut penser que ceci est dû au fait que la couche support 4 pénètre au moins partiellement dans les canaux et que la couche de catalyseur 5 n'interagit avec l'hydrogène qu'au niveau du débouché des canaux 13.

### Résumé de l'invention

Un objet de la présente invention est de prévoir une nouvelle structure de pile à combustible intégrée permettant d'améliorer le rendement électrochimique par unité de surface.

Un autre objet de la présente invention est de prévoir un procédé de fabrication d'une telle pile à combustible.

Un autre objet de la présente invention est de prévoir une telle pile à combustible de structure simple.

Pour atteindre ces objets, la présente invention prévoit une cellule de pile à combustible dont l'empilement actif repose sur une couche conductrice mince, s'appuyant sur une plaque munie de canaux transversaux d'arrivée de gaz, la couche conductrice mince faisant saillie dans l'empilement actif au regard de chaque canal et étant transparente audit gaz.

Selon un mode de réalisation de la présente invention, la couche conductrice mince est une couche d'or.

Selon un mode de réalisation de la présente invention, les diverses couches actives de la pile à combustible épousent le profil des protubérances de la couche conductrice mince.

La présente invention prévoit aussi un procédé de fabrication d'une pile de cellule à combustible comprenant les étapes consistant à prévoir une plaque support ; creuser des canaux non débouchants à partir d'une première face de la plaque support ; revêtir lesdits canaux d'un premier matériau ; former un évidement à partir de la deuxième face de la plaque, cet évidement dégageant les extrémités du premier matériau ; déposer sur la deuxième face une couche mince d'un matériau conducteur transparent à l'hydrogène ; éliminer la première couche de matériau au moins sous la couche mince d'un matériau conducteur ; et former dans ledit évidement un empilement de couches propre à constituer une pile à combustible dont la face inférieure doit recevoir de l'hydrogène.

Selon un mode de réalisation de la présente invention, les matériaux dudit empilement de couches sont déposés par un procédé de jet d'encre.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 est une vue en coupe d'une cellule de pile à combustible connue ; et
les figures 2A à 2E sont des vues en coupe illustrant des étapes successives de fabrication d'une pile à combustible selon la présente invention ; et
les figures 3 à 7 illustrent des modes de réalisation de la présente invention:

Par souci de clarté, comme cela est habituel dans la représentation des microcomposants, les éléments des diverses vues en coupe et en perspective ne sont pas tracés à l'échelle.

### Description détaillée

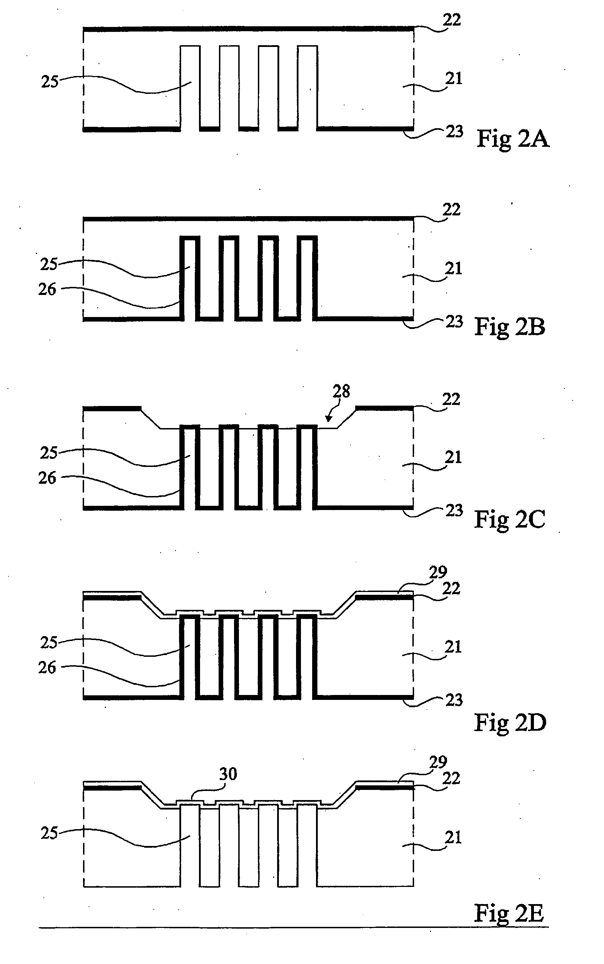

Les figures 2A à 2E sont des vues en coupe schématiques illustrant des étapes successives de fabrication d'une cellule de pile à combustible selon la présente invention. Pour cette fabrication, on part d'une plaque support. Pour simplifier la présente description, on se placera dans le cas où cette plaque support est en silicium mais l'homme du métier comprendra que d'autres types de matériaux peuvent être utilisés, ce qui entraînera des adaptations correspondantes dans le choix des procédés associés, notamment des procédés de gravure, et le choix des matériaux d'isolement.

Ainsi, la figure 2A représente une plaque de silicium 21 revêtue sur ses faces supérieure et inférieure (ou avant et arrière) de couches de protection 22 et 23. La couche de protection 23 du côté de la face arrière est gravée pour y définir des ouvertures. Des canaux 25 sont creusés selon les contours définis par ces ouvertures, par un procédé de gravure anisotrope, couramment une gravure plasma.

A l'étape suivante illustrée en figure 2B, un matériau 26 est déposé dans les canaux 25 pour revêtir leurs parois et leurs fonds, comme cela est représenté, ou pour les remplir complètement. Comme on le verra ci-après, ce matériau doit être gravable sélectivement par rapport au silicium et à un métal. Dans un exemple d'application de la présente invention, le revêtement 26 est constitué d'une couche d'oxyde de silicium obtenue par croissance thermique. Les couches de protection 22 et 23 pourront également être en oxyde de silicium, par exemple obtenues par dépôt.

A l'étape illustrée en figure 2C, on définit une ouverture dans la couche de protection supérieure 22 et on grave dans la face avant de la plaque 21 un évidement 28. L'évidement 28 est suffisamment profond pour s'étendre au-delà des fonds des canaux 25 recouverts de la couche 26. La gravure est telle qu'elle n'attaque pas le matériau de la couche 26 et qu'il reste donc des protubérances du matériau de la couche 26 au fond de l'évidement 28. Selon le mode de fabrication, ces protubérances auront des formes différentes, selon la forme des fonds des canaux résultant de la gravure plasma, ou autre gravure de réalisation de ces canaux. Ces protubérances auront par exemple la forme de dômes arrondis.

A l'étape illustrée en figure 2D, on a déposé sur la face supérieure de la structure une couche d'un métal ou d'un alliage suffisamment épais pour être un bon conducteur de l'électricité et suffisamment fin pour être transparent à l'hydrogène. On pourra par exemple choisir une couche d'or d'une épaisseur de l'ordre de 500 nm.

Ensuite, à l'étape illustrée à la figure 2E, on élimine le matériau de la couche 26, au moins au fond des canaux 25, là où cette couche est recouverte de la couche conductrice 29. On conserve donc des protubérances 30 de la couche d'or 29.

A titre d'exemple d'ordre de grandeur, on notera que la plaque support 21, dans le cas où il s'agit d'une plaque de silicium peut avoir une épaisseur de l'ordre de 300 à 500 µm, que les canaux 25 peuvent être des perforations circulaires d'un diamètre de l'ordre de 40 à 50 µm, à un pas de 40 à 50 µm et que l'ensemble de la zone perforée peut avoir une surface de l'ordre du cm². Les protubérances 30 de la couche d'or 29 peuvent avoir une hauteur de 10 à 20 µm.

A partir de la structure obtenue en figure 2E, on peut procéder au dépôt de l'empilement actif 8 décrit en relation avec la figure 1, étant entendu que, dans cet empilement actif, la couche support 4 devient inutile. En effet, cette couche support avait pour but d'éviter que le matériau de la première couche de catalyseur 5 redescende dans les canaux. La forme en relief, éventuellement bombée, des protubérances d'or 30 entraîne que l'hydrogène quitte les canaux 23 vers le haut et vers les côtés et se disperse mieux dans la couche de catalyseur inférieure.

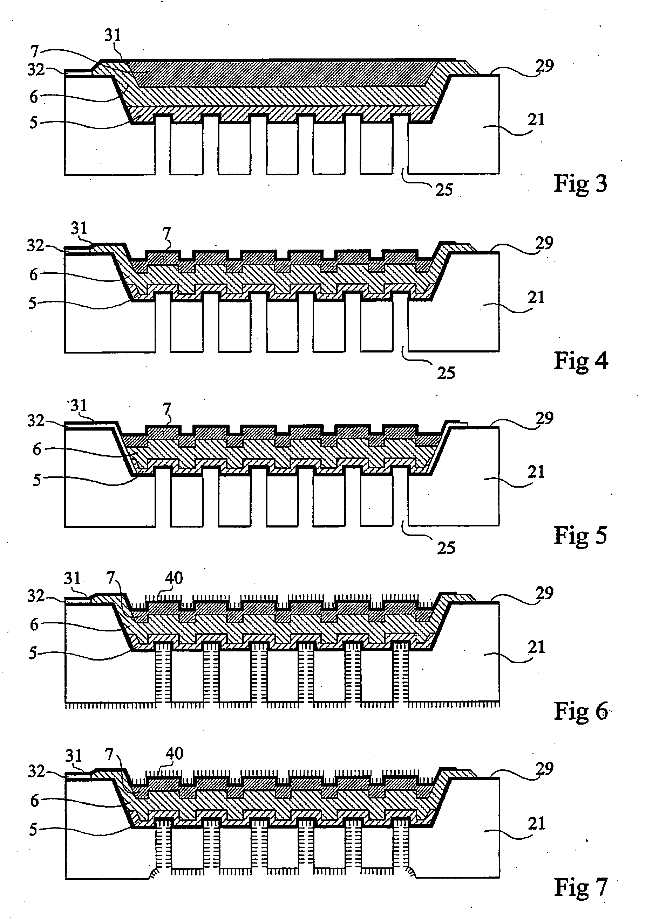

Diverses façons de réaliser l'empilement actif 8 vont être décrites en relation avec les figures 3 à 7. Dans ces figures, la plaque support est désignée par la référence 21, les canaux par la référence 25, la couche conductrice mince transparente à l'hydrogène par la référence 29, la première couche de catalyseur par la référence 5, la couche d'électrolyte par la référence 6, la seconde couche de catalyseur par la référence 7, et l'électrode supérieure perforée ou transparente à l'oxygène par la référence 31.

Dans le mode de réalisation de la figure 3, la première couche de catalyseur 5 est déposée de façon à avoir une surface supérieure sensiblement plane. La couche d'électrolyte 6 est déposée de façon à voir une épaisseur sensiblement constante (dépôt conforme) et la deuxième couche de catalyseur 7 est déposée pour être présente seulement dans la cuvette centrale de la couche de catalyseur 6 résultant du dépôt conforme de celle-ci. Un isolant 32 est formé aux emplacements où la première couche conductrice 29 risque d'être en contact avec la deuxième couche conductrice 31.

La figure 4 représente un deuxième mode de réalisation de la présente invention dans lequel chacun des dépôts des couches actives 5, 6 et 7 est un dépôt conforme. Dans ce mode de réalisation la couche de catalyseur supérieure ne vient pas en contact avec la première électrode 29.

La figure 5 illustre un autre mode de réalisation de dépôt conforme dans lequel la couche de métallisation supérieure vient en contact avec le bord de l'évidement 28 et risquerait donc d'être en court-circuit avec l'électrode inférieure 29. Pour éviter ce risque de court-circuit, la couche isolante 32 est prolongée pour s'étendre sur les parois latérales de l'évidement 28 dans lequel sont formées les couches actives.

Selon un aspect de l'invention, les dépôts des matériaux des couches 5, 6 et 7 peuvent être réalisés par jet d'encre, les technologies actuelles permettant d'obtenir des définitions de motif de l'ordre de quelques dizaines de µm, ce qui est compatible avec les dimensions élémentaires des cellules selon la présente invention dans lesquelles, comme on l'a indiqué précédemment, les perforations ont des diamètres de l'ordre de la cinquantaine de µm.

Les variantes illustrées en figures 4 et 5 sont destinées à augmenter la surface de contact entre les diverses couches actives et entre les couches de catalyseur et les zones d'arrivée d'hydrogène et d'oxygène, afin d'augmenter les rendements des piles concernées.

Les modes de réalisation des figures 6 et 7 reprennent la structure de la figure 5 et y ajoutent une croissance de nanotubes, par exemple de nanotubes de carbone sur les surfaces supérieure et inférieure de la pile et notamment dans les canaux 25. La prévision d'un tel tapissage par des nanotubes de carbone permet d'améliorer, d'une part, la gestion de l'eau au sein de la structure en raison du caractère hydrophobe des nanotubes, d'autre part, la gestion thermique du coeur de pile en raison de la faible résistance thermique de ces nanotubes.

Dans le mode de réalisation de la figure 7, on a formé un évidement sur la face inférieure de la plaquette en regard de la zone perforée. Dans ce mode de réalisation, cet évidement est destiné à protéger les nanotubes de carbone. On notera qu'un tel évidement peut être prévu dans les autres modes de réalisation pour permettre de réduire la hauteur des canaux d'amenée d'hydrogène.

## Revendications

1. Pile à combustible dont l'empilement actif (8) repose sur une couche conductrice mince (29), s'appuyant sur une plaque (21) munie de canaux transversaux d'arrivée de gaz (25), la couche conductrice mince faisant saillie dans l'empilement actif au regard de chaque canal et étant transparente audit gaz.

2. Pile à combustible selon la revendication 1, dans laquelle la couche conductrice mince est une couche d'or.

3. Pile à combustible selon la revendication 1, dans laquelle les diverses couches actives de la pile à combustible épousent le profil des protubérances (30) de la couche conductrice mince.

4. Procédé de fabrication d'une pile de cellule à combustible comprenant les étapes suivantes :
prévoir une plaque support (21) ;
creuser des canaux non débouchants (25) à partir d'une première face de la plaque support (21) ;
revêtir lesdits canaux d'un premier matériau (26) ;
former un évidement (28) à partir de la deuxième face de la plaque, cet évidement dégageant les extrémités du premier matériau ;
déposer sur la deuxième face une couche mince d'un matériau conducteur (29) transparent à l'hydrogène ;
éliminer la première couche de matériau (26) au moins sous la couche mince d'un matériau conducteur ; et
former dans ledit évidement un empilement de couches (8) propre à constituer une pile à combustible dont la face inférieure doit recevoir de l'hydrogène.

5. Procédé selon la revendication 4, dans lequel les matériaux dudit empilement de couches sont déposés par un procédé de jet d'encre.

## Claims

1. A fuel cell having its active stack (8) resting on a thin conductive layer (29), bearing on a wafer (21) provided with through gas inlet channels (25), the thin conductive layer protruding in the active stack in front of each channel and being transparent to said gas.

2. The fuel cell of claim 1, wherein the thin conductive layer is a gold layer.

3. The fuel cell of claim 1, wherein the various active layers of the fuel cell conform to the profile of the protrusions (30) of the thin conductive layer.

4. A method for manufacturing a fuel cell, comprising the steps of:
providing a support wafer (21);
digging non-through channels (25) from a first surface of the support wafer (21);
coating said channels with a first material (26);
forming a recess (28) from the second surface of the wafer, this recess exposing the ends of the first material;
depositing on the second surface a thin layer of a conductive material (29) transparent to hydrogen;
eliminating the first layer of the material (26) at least under the thin layer of a conductive material; and
forming in said recess a stack of layers (8) capable of forming a fuel cell having a lower surface that can receive hydrogen.

5. The method of claim 4, wherein the materials of said stacking of layers are deposited by an inkjet method.

## Patentansprüche

1. Brennstoffzelle, deren aktiver Stapel (8) auf einer dünnen leitenden Schicht (29) ruht, wobei er auf einem Wafer (21) aufliegt, der mit durchgehenden Gaseinlasskanälen (25) versehen ist, wobei die dünne leitende Schicht in den aktiven Stapel vor jedem Kanal vorsteht und durchlässig für das Gas ist.

2. Brennstoffzelle nach Anspruch 1, wobei die dünne leitende Schicht eine Goldschicht ist.

3. Brennstoffzelle nach Anspruch 1, wobei die verschiedenen aktiven Schichten der Brennstoffzelle zum Profil der Vorsprünge (30) der dünnen leitenden Schicht passen.

4. Verfahren zur Herstellung einer Brennstoffzelle, welches folgende Schritte aufweist:
Vorsehen eines Trag-Wafers (21);
Einschneiden von nicht durchgängigen Kanälen (25) von einer ersten Oberfläche des Trag-Wafers (21);
Beschichten der Kanäle mit einem ersten Material (26);
Formen einer Ausnehung (28) aus der zweiten Oberfläche des Wafers, wobei diese Ausnehmung die Enden des ersten Materials freilegt;
Ablagern einer dünnen Schicht eines leitenden Materials (29), welches für Wasserstoff durchlässig ist, auf der zweiten Oberfläche;
Entfernen der ersten Schicht des Materials (26) zumindest unter der dünnen Schicht eines leitenden Materials; und
Formen eines Stapels von Schichten (8) in der Ausnehmung, die eine Brennstoffzelle mit einer Unterseite bilden können, die Wasserstoff aufnehmen kann.

5. Verfahren nach Anspruch 4, wobei die Materialien des Stapels von Schichten durch ein Tintenstrahlverfahren abgelagert werden.
